Europäisches Patentamt

European Patent Office

Office européen des brevets

(11) Publication number: **0 266 473**
**A2**

## (12) EUROPEAN PATENT APPLICATION

(21) Application number: 86850382.2

(51) Int. Cl.4: **C02F 1/02**

(22) Date of filing: 03.11.86

(43) Date of publication of application:
11.05.88 Bulletin 88/19

(84) Designated Contracting States:
**DE FR GB IT SE**

(71) Applicant: **Weltman, Jacob**
**Tryffeistigen 8**
**S-611 63 Nyköping(SE)**

(72) Inventor: **Weltman, Jacob**
**Tryffeistigen 8**
**S-611 63 Nyköping(SE)**

(54) **Method and apparatus for the recovery of waste water from industrial processes.**

(57) Method for the reuse and recirculation of liquids, particularly water, in industrial proceses, in which machines discharge waste liquids of varying temperatures and degrees of pollution and in which segregation valves (SV/CO, SV/WA) are used to separate liquids of differenct heat and polution content. The novel steps is that in a first segregation step, based on temperature only, the waste water is subdivided into two groups, viz. hot ↔ nonreusable and cold ↔ potentially reusable.

*Fig. 1*

EP 0 266 473 A2

## Method and apparatus for the recovery of waste water from industrial processes

Many industries, like food, textile and laundry industry, use large quantities of water and energy for their processes.

Although the primary input of water and energy into the processes to some extent can be reduced by process modifications, substantial reductions of water and energy consumption require the development of efficient methods for water and energy recovery and recirculation.

Recovery and recirculation of water and energy obviously requires segregation:

a) For efficient energy recovery, hot and cold waste waters must be separated in order to avoid mixing, which would cause an irreversible increase of system entropy and loss of temperature.

b) For reuse of waste water without excessive purification problems, clean or slightly polluted process waters must be separated from highly polluted proces waste water flows.

These requirements on segregation and separation may be schematically illustrated as follows, whereby:

WA = warm (i.e., useful for energy recovery)
CO = cold (i.e., not useful for economical energy recovery)
CL = clean (i.e., fully or partially reusable for processes)
PO = polluted (i.e., not reusable without purification)

= three way valve

As is evident from the above figures, in order to seperate process fluids both with respect to temperature level and degree of pollution, at least four drainage systems are required :

WA/CL = CL/WA = warm and clean
WA/PO = PO/WA = warm and polluted
CO/CL = CL/CO = cold and clean
CO/PO = PO/CO = cold and polluted

In a factory with many continuous and/or batch type machines and processes, as frequently found in the food, textile and laundry industries, it is not feasible practically or economically, to introduce four different drainage systems from each machine or process. Also, the costs for measuring equipment required at each machine to perform the segregation/separation, would be excessive. Particularly, for the segregation on CL and PO, rather expensive measuring equipment (like PH, conductivity, photometric etc. meters) would be required.

As a consequence of the above mentioned difficulties, there are today no sucessful methods for simultaneous water and energy recovery in factories with machines and processes discharging waste waters, the quality and temperature of which frequently changes with time.

The present invention remedies the above problem, in that it offers a simplified and practical approach to reducing the multi-parameter segregation requirement for industrial waste waters.

The invention is based on the observation that in practical industrial applications, with only a small loss of water and/or energy recovery potential, it is permissible to arrange the segregation such that WA is set = PO, which implies that warm effluents are treated as polluted.

The cold effluents will be mostly rather clean. Therefore according to the invention, a group segregation is permissible, such that the segregation of the cold waters is performed on the common cold waste water discharge line. As the CO group will normally contain waters with small or moderate pollution, the effect of interference between such waters on the common discharge pipe is tolerable. Also, it is economically and practically quite feasible to arrange, at the end of the common CO pipe line, a continuous quality segregation of the CO water, such that different grades (G1, G2, G3) are identified and stored separately for later reuse.

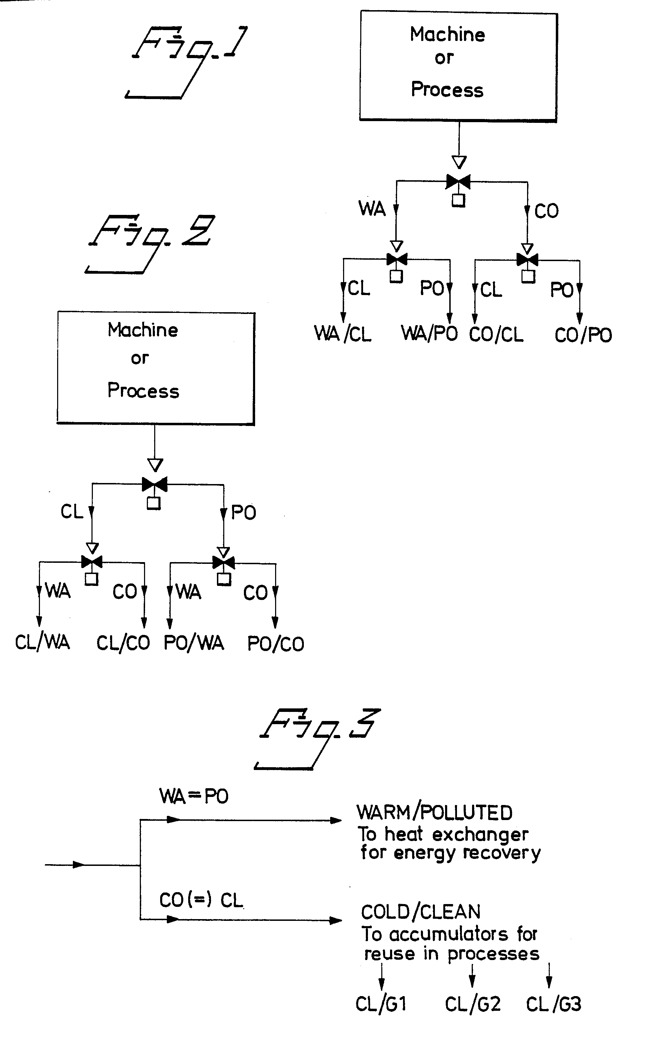

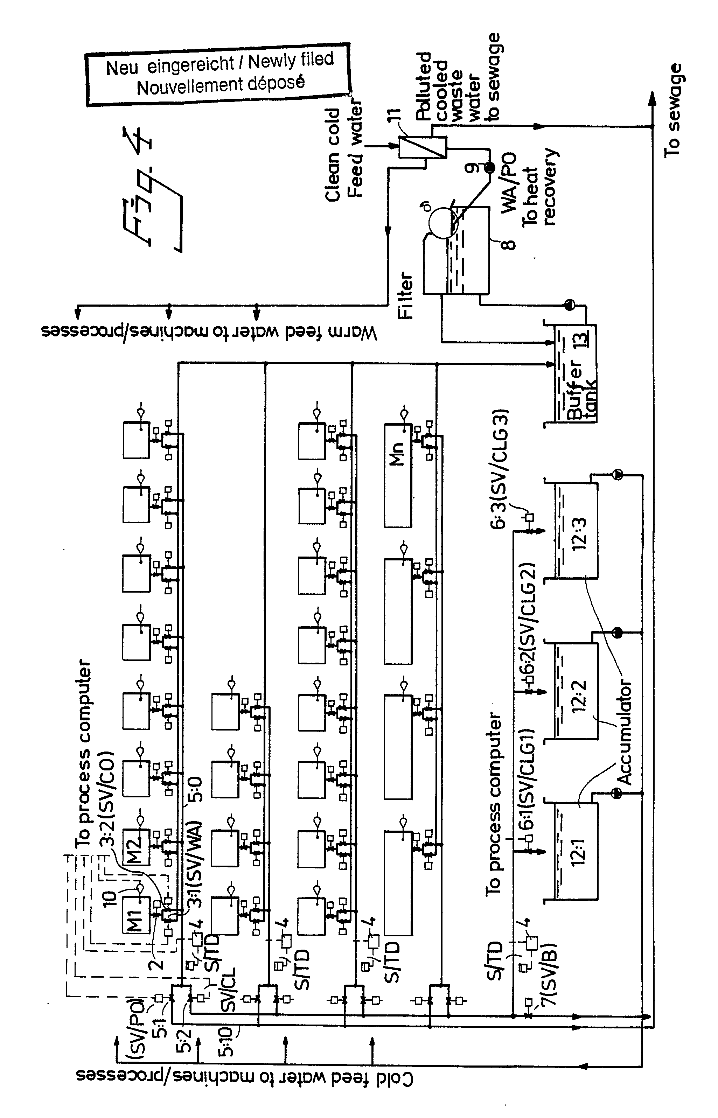

A typical embodiment of the invention will now be described with reference to Fig. 1.

In this figure, (1) represents one of several machines or processes, form which waste water at varying temperatures is discharged batchwise or continuously.

The temperature of the waste water is measured by a temperature sensor (TS) (10), mounted either in the machine or on the discharge pipe before the emptying valve EV (2). This valve can be omitted in such cases, when the segregation valves (3:1) and (3:2) are suitable, from a mechanical strength and leakage point of view, to take on the function of shut-off valves as well.

The temperature signal from (10) is fed to a computer or electronic control unit, where is is compared with a reference temperature level, defining the discrimination criterium between cold and warm water. The reference temperature level may be a complex function of several chemical or thermodynamic properties of the system, as shown by other patents and patent applications by the inventor.

Depending on the outcome of the comparison of the actual temperature value from (10) with the reference value, the computer or electronic control unit will open either one of the segregation valves (3:1) or (3:2), whereby (3:1) is the warm water segregation valve SV/WA and (3:2) is the cold water segregation valve SV/CO.

Whenever (3:1) opens, the warm polluted waste waters will be admitted to a warm waste water discharge line, which may empty into a buffer tank (13) as shown in the figure. From the buffer tank (13), the hot/polluted waste water may be fed to a filter (8), from which it may be pumped by a pump (9) to a heat recovery system (11), which is not further described in the present application. The heat recovered through the heat exchanger (11) is carried back to the processes by clean cold water, passed through (11), thereby taking up the heat from the hot polluted waste water.

Whenever the cold water segregation valve (3:2) is opened, cold and normally rather unpolluted waste water will be admitted to a cold waste water drainage pipe, serving either a group of machines or the entire factory.

Figure 1 shows four groups of machines, each having a separate cold water drainage pipe.

The quality of the cold waste water is monitored continuously by electronic measuring equipment (4) with sensors/transducers S/TD. One or several measuring equipments may be used, such as PH, conductivity, photometric, spectroscopic etc.. The measuring signal(s) are fed to, e.g., a computer, for comparison with predetermined quality acceptance levels stored in the computer.

Depending on the outcome of the comparison, either one of the valves (5:1) or (5:2) will be opened.

If the quality of the water is not acceptable, the valve 5:1 will open, and the cold water will be discarded to the common sewage line.

If the water can be accepted for reuse, either directly or based on a further quality grading, the valve 5:2 will be opened. The final quality grading may be accomplished by further segregation valves (6:1) --(6:3), which open to admit the water to either one of a number of reusable water accumulators (12), whereby accumulator No. 1 may correspond to Grade 1 (G1) water, accumulator No. 2 to Grade 2 (G2) water, etc., such that the highest grade of water denotes water directly reusable in the processes, whereas the lower grades may have more limited usage, such as for washing of printing screens in textile industry, as feed water to the first section of washing tunnels in the textile industry, etc.

Thus, by observing that in the segregation process a practical equality may be set between "WA" and "PO", and by using an inexpensive temperature measurement for the first segregation step, a farreaching simplification of the dual quality and temperature segregation problem is achieved.

Using the method tought by the present application, the number of separate pipe-lines for waste process liquides may be reduced by a factor of two, and only very few qualified instruments are required to segregate and reclaim practically all such unpolluted or only slightly polluted waste liquids, which may be reused without extensive prior purification. Furthermore, the investment in energy recovery equipment is reduced, as only one heat recovery system is required.

**Claims**

1. Method for the reuse and recirculation of liquids, particularly water, in industrial processes, in which machines discharge waste liquids of varying temperatures and degrees of pollution and in which segregation valves are used to separate liquids of different heat and pollution content, **characterized** thereby, that in a first segregation step based on temperature only, the waste water is subdivided into two groups, viz. hot ↔ nonreuseable and cold ↔ potentially reusable.

2. Method according to claim No. 1, **characterized** thereby that a second segregation step is introduced on the total flow of, (according to the first temperature based segregation step) potentially reusable waste liquid from the factory or from a group of processes or machines within the factory, such that said total flow is separated in two categories, viz. "acceptable" and "non-acceptable", whereby the second segregation is based on the measurement of one or several chemical and/or physical properties of the flow, other than temperature.

3. Method according to claim No. 2, **characterized** thereby that the centrally or group-wise measured chemical/and or physical properties of the flow of liquid accepted for recirculation, is utilized in order two differentiate the flow with respect to content of contaminants, thereby establishing distinctive quality grades of reusable liquid.

Fig.1

Fig.2

Fig.3

Fig. 4

Neu eingereicht / Newly filed
Nouvellement déposé

0 266 473